# EUROPEAN PATENT SPECIFICATION

(11) **EP 1 581 423 B1**
(45) Date of publication and mention of the grant of the patent: **27.02.2008**
(21) Application number: 03815134.6
(22) Date of filing: 09.01.2003
(51) Int. Cl.: B62J 1/08, B60C 23/16, B62J 39/00, B62K 17/00

(54) **RECHARGEABLE PUMPING UP DEVICE INTEGRATED INTO THE CYLINDER SUPPORTING THE SADDLE OF A BICYCLE**
WIEDERBEFÜLLBARE AUFPUMPVORRICHTUNG, INTEGRIERT IN EINEN, DEN SATTEL EINES FAHRRADS STÜTZENDEN, ZYLINDER
DISPOSITIF DE POMPAGE RECHARGEABLE INTEGRE AU CYLINDRE PORTANT LA SELLE D'UNE BICYCLETTE

(43) Date of publication of application: 05.10.2005
(73) Proprietor: Di Blasio, Roberto, 17031 Albenga (IT)
(72) Inventor: Di Blasio, Roberto, 17031 Albenga (IT)
(74) Representative: Turini, Laura
(86) International application number: PCT/IT2003/000005
(87) International publication number: WO 2004/062992

(56) References cited:
- DE-A- 4 223 165
- DE-U- 20 002 879
- DE-U- 29 917 697
- FR-A- 2 660 253

## Description

### Technical Field

The present invention concerns the technical sector relative to the industrial production of cycles and other similar vehicles. In particular, it relates to the production of pumps, or other means, used to inflate the wheels of the cycles and manufactured so as to be easily carried with the vehicle.

### Background Art

The cycles currently produced, except for sporadic manufacturing variations anyway following the nowadays settled planning tradition worldwide, in order to get or however restore the correct pressure inside tyres, use manual air pumps, having different shapes and designs according to the style of the bicycle. In order to pump up tyres, also throwaway CO2 canisters are used in case of emergency to take the wheel back to the desired pressure state.

The insertion of the pump, or the CO2 canister, as an essential accessory for the vehicle, has however some drawbacks. Principally, it's necessary to add to the frame one or more supports, generally in metal tube, with the function of supporting and fixing the same pump; said supports can be either welded or attached by means of particular screw clamps, pressure tight to the frame, placed at suitable wheel base, holding the pump. This arrangement is not pleasant to look at, is bulky and may result even dangerous when using the vehicle, in addition it can be easily robbed, and in any case it involves an increase in the output costs that, even if small considering a single application, becomes significant in mass productions. Another drawback is the ease to remove the pump from the vehicle, which can be an advantage on the one hand for its use, but on the other it's not safe from stealing. A further drawback concerns the operation of pumping up the tyres, which requires expenditure of time and energy, both for common bicycles and, even more, for those bicycles universally called "mountain bikes", in fact they need, because of their shape, more air capacity even if at same pressure; in addition, their increasing use inevitably involves a greater percentage risk of puncture and a more frequent need of pumping up, as they are generally used on bumpy and rough grounds entailing more shudders on tyres, which do not permit incorrect inner pressure of the wheels, both in professional and amateur sport sector, as well as in common enjoyable naturalistic use.

In order to avoid some of these drawbacks, the market is offering in place of the traditional manual pump, a kind of throwaway canisters, with liquid gas (CO2) because of the high pressure inside.

CO2 canisters nowadays in use are equipped with outlet valves connected to a pipe bearing the pressure exerted, at the opposite end, by a valve compatible with the rapid clutch to the inner-tube valve of the tyre. Said valve is closed by welding, which is punctured when the regulating tap must be inserted, which has in its turn a clutch compatible with the valve of the bicycle; consequently, once used, the canister must be thrown away as it can be used no more. In this way, by using this support, it's possible to avoid the above mentioned drawbacks concerning the need to always carry with us the manual pump, as well as the inflating time and the relative efforts.

Nevertheless, all the other drawbacks remain, such as the need however to find a suitable comfortable place for carrying it, the probability of loss or theft - as it's necessary to equip the vehicle for carrying the canister with further supports, obviously avoiding that the transportation of this accessories loads the store and/or baggage of the user - as well as the risk of damages caused by the bulk to the cyclist.

Document DE 4 223 165 A1 shows a seat post according to the preamble of claim 1, suitable for a bicycle or a tricycle with or without motor. It describes a wheel with an integrated chamber which may be filled with highly-compressed air and is equipped with an inlet valve and an outlet valve, a tyre joined with the inlet valve and one valve for each rim, which is placed above and together with them in the chamber, so that it can be inflated thanks to the highly-compressed air. In such a way, it is easily feasible to pump up the tyres.

### Disclosure of invention

Solving the above drawbacks is achieved by a seat post according to claim 1. Preferred embodiments are defined in the dependent claims.

The present invention is an evolution of the solution of pumping up by means of compressed gases, but compared with the current solution that keeps the pumping accessory separate, this invention integrates instead said accessory into the frame of the vehicle.

Reduced to its essential structure and with reference to the figures of the enclosed drawings, a pumping up device integrated into a bicycle, or other similar means, according to the invention, comprises:
- means to hold the gas for pumping up the tyres of cycles and/or motorcycles, by a cylindrical tank (1) with liquid pressurized gas (CO2), having the double function of cylinder supporting the saddle, adjustable in height, and automatic pumping up device;
- means to fill the pressurized gas contained in the tank into the tyres, with inlet/outlet valves placed on the body of the same tank;
- means to make the application of this invention universal for the accessories currently offered on the market, consisting of a support for the saddle, welded, integrated or otherwise steadily fixed on the upper surface of the cylinder, and equipped with a standard saddle support for aluminium pipes.

This invention may either comprise two separate valves, one for the loading and one for the unloading of the gas, or one single inlet/outlet valve capable of carrying out both the functions.

Conveniently, the cylindrical tank containing the gas is an integral part of the existing cylindrical tube supporting the saddle. Using this element, modified in its thickness for bearing the pressure, closed in its lower and upper part, and having such a suitable length necessary for getting a sufficient volume development, it's possible to offer the consumer a perfect solution for pumping up problems, without causing any additional bulk to the vehicle.

Conveniently, in order to control possible variations of temperature, compromising the pressure of the gas into the cylindrical tank, said tank is covered by a neoprene lining with isothermal function, stuck out of the cylinder and pleasant to look at. As a matter of fact, as it's known that the pressure is a function of the temperature, this detail makes the invention resistant to any climatic variation or induced heat source, providing not only several advantages but also a further factor of safety and reliability. In addition, we know that the increase in temperature in a gas, even if liquid, generates its volume development that, for equal size tanks - in this case the cylinder supporting the saddle - causes an increase in pressure, for which the cylinder is however properly sized in shape and thickness of the material as to bear the pressure. The neoprene lining (5), however, has such an isothermal function as to bear elevated temperature variations, so making this invention reliable in any climatic-environmental condition.

Conveniently, the cylindrical gas tank can be recharged by the specific valves placed on its body. The manufacturing simplicity is possible thanks to the use of valves currently in commerce, suitably modified so as to result suitable to load and unload the gas.

Conveniently, the valves can be placed at the base of the cylinder, in axis, at the lower inside of the central frame of the cycle, at the opposite part of the saddle support, welded at the upper end, so that the valve is protected. In this case, every time the tyre must be pumped up, it will be necessary to remove the entire cylinder of the saddle and connect the lower valve to the valve of the tyre.

Conveniently, the valves may be placed in upper position, perpendicular to the axis of the cylinder, near the saddle support, in any case in the portion that, regardless of the regulation in height of the same saddle, results however out of the central frame of the vehicle, therefore immediately accessible, so as to be immediately used, by means of a flexible tube, equipped at the ends with rapid clutches, without any need to remove the cylinder from the central frame.

When the valve is perpendicular to the cylinder, the neoprene lining has a hole in the point of the same valve, so that it naturally projects. On the contrary, if there isn't any hole, in case the lining covers the valve, it must be lowered before using the same valve.

A possible personalization of the vehicle, such as the replacement of the saddle with compatible models, is however possible thanks to its support, welded, integrated or otherwise steadily fixed on the top of the cylinder and provided as saddle support for standard aluminium pipes, with holes placed at standard distance, facilitating the interchange with the spare parts found on the market.

Conveniently, as the invention avoids the need of the manual pump, it consequently avoids any relative drawback, mainly constituted by the probability of loss, theft, wear and tear or bad functionality.

Conveniently, the invention also avoids any expenditure of time and energy in the operation of total pumping or restoring of the correct pressures by means of the manual pump, replacing this action with the one of the compressed gas contained inside the tank.

Conveniently, the support of the saddle, welded, integrated or otherwise steadily fixed to it, lets the possibility of personalization of the vehicle, complying with the assembling methods of the various kinds of existing saddles.

Conveniently, the invention is equipped with inlet/outlet valves, placed inside or outside the central frame, which makes the tank possible to be constantly reused, being rechargeable.

Conveniently, the invention makes the vehicle independent and compact, integrating an essential element as the pump - currently separate from the structure of the cycle - into the whole of its various elements, so taking a further step forward in the age-old manufacturing technology of this kind of vehicle.

In practice, the manufacturing details may, however, equally vary as regards shape, size, position of elements, and type of materials used, but still remain within the range of the idea proposed as a solution and, consequently, within the limits of the protection granted by this patent for invention.

### Brief description of drawings

The characteristics of the present invention can be better understood by every expert in this field, referring to the enclosed drawings, given as practical examples of the invention, but not to be considered restrictive.

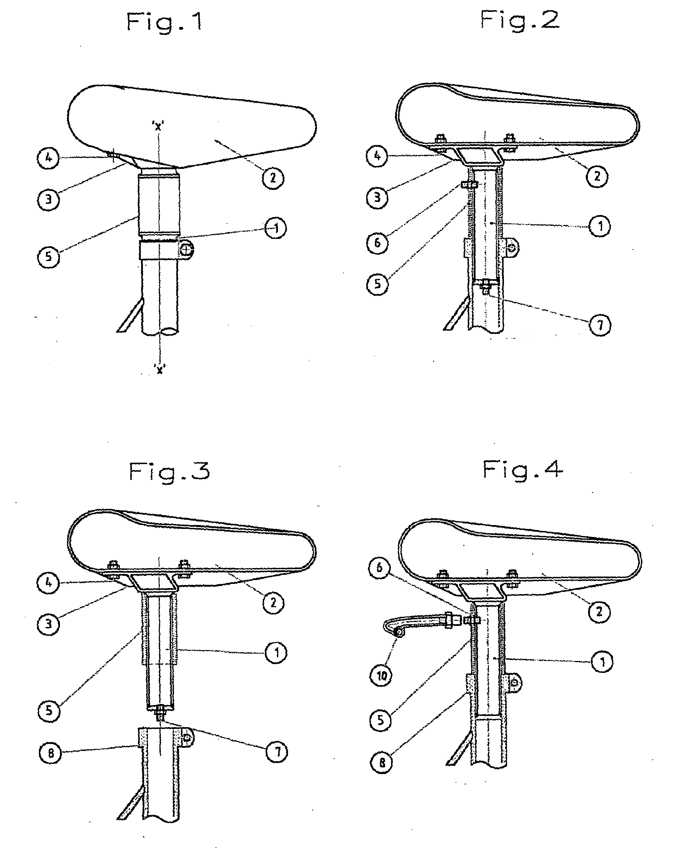

- **Fig. 1** shows a side view of the invention. From this detail it's possible to note that the cylindrical tank (1) does not damage the overall visual effect, as it results outside geometrically equivalent to the standard element supporting the saddle (2), by means of an intermediate flange shaped support (3), and is welded, integrated or otherwise steadily fixed on the top of the cylinder, and assembled to the saddle by means of screws (4), placed each other at standard distance, therefore compatible with the spare parts of the saddle found on the market, without any damage to the functionality of the invention. This figure also shows the neoprene lining (5), which thermally isolates the outer portion of the cylinder, so avoiding elevated temperature variations that could alter the functionality of the invention, varying the pressure of the gas inside the cylindrical tank (1).
   **Figs. 2, 3, 4** show a sideways section of the invention with a clear distinction between the two possible solutions relating to the possible positions of the gas inlet/outlet valves (6, 7). As a matter of fact, said valves may either be placed at the base of the cylindrical tank (1), in axis (x), inside the central frame (8) of the cycle (Fig. 3), or the valves may take a different position, perpendicular to said axis (Fig. 4), in upper position, however outside the frame (8), regardless of the regulation in height of the same saddle (2). The advantage of the first solution (Fig. 3) consists in that it doesn't need any external bulk, but on the other hand, in order to put this solution in practice, it's necessary to remove the cylinder; the other manufacturing solution (Fig. 4) makes the use of the invention immediate, after the simple removal of the neoprene lining (5) or its puncture in the valve zone, so making the gas contained in the cylinder immediately available. The connection between the valves of the cylinder (6, 7) and the ones of the tyres, can take place by means of common rapid clutches through a suitable flexible tube (10) that, if desired, might be equipped at the bottom with a manometer for a correct measure of the pressure inside the tyres and with a universal connection for various types of valves for cycles.

## Claims

1. Seat post for a bicycle or similar, including a pumping up device, comprising:
- a cylindrical tank (1) to hold the gas for pumping up tyres of cycles and/or motorcycles, the cylindrical tank (1) being equipped to support a saddle (2), being adjustable in height and being an automatic pumping up device;
- means to fill the pressurized gas contained in the cylindrical tank (1) into the tyres comprising inlet/outlet valves (6,7) placed on the body of the cylindrical tank (1);
**characterized in**
- **that** the cylindrical tank (1) is filled with liquid pressurized gas, and
- **that** the cylindrical tank (1) further comprises a support (3) for the saddle (2), welded, integrated or otherwise steadily fixed on the upper surface of the cylindrical tank (1), and equipped with a standard saddle support (3) for aluminium pipes.

2. Seat post as claimed in claim 1, **characterized in that** the cylindrical tank (1) containing the gas is an integral part of the existing cylindrical tube supporting the saddle (2), modified in its thickness for bearing the pressure, closed in its lower and upper part, and having such a suitable length necessary for getting a sufficient volume development.

3. Seat post as claimed in claim 1, **characterized in that** in order to control possible variations of temperature, said cylindrical tank (1) is covered by a neoprene lining (5) with isothermal function, stuck out of the cylinder.

4. Seat post as claimed in claim 1, **characterized in that** the cylindrical tank (1) can be recharged by a specific inlet/outlet valve (6,7) placed on its body, suitably modified so as to result suitable to load and unload the gas.

5. Seat post as claimed in claim 1 or 4, **characterized in that** the valves (6, 7) are placed at the base of the cylinder, in axis, at the lower inside of the central frame (8) of the cycle, at the opposite part of the saddle (1) support (3), welded at the upper end, so that the valve is protected.

6. Seat post as claimed in claim 1, **characterized in that** the valves (6, 7) are placed in upper position, perpendicular to the axis of the cylindrical tank (1), near the saddle (1) support (3), in any case in the portion that, regardless of the regulation in height of the same saddle (2), results however out of the central frame (8) of the vehicle, therefore immediately accessible, so as to be immediately used, by means of a flexible tube (10), equipped at the ends with rapid clutches, without any need to remove the cylinder from the central frame (8).

7. Seat post as claimed in claim 1, **characterized in that**, when the valve (6, 7) is perpendicular to the cylindrical tank (1), the neoprene lining (5) has a hole in the point of the same valve, so that it naturally projects.

## Patentansprüche

1. Sattelstütze für Fahrräder o. ä. mit einer Pumpenvorrichtung, die aufweist:
- Eine zylindrische Kammer (1), welche das Gas zum Fahrrad- und/oder Motorradreifenaufpumpen enthält und so ausgebildet ist, dass den Sattel (2) stützt, in Höhe einstellbar und automatisch gesteuert ist.
- Mittel, welche die Reifen mit dem in diese zylindrische Kammer gedrückten Gas aufpumpen und die auf das Kammergehäuse eingesetzte Auslass- bzw. Einlassventile (6,7) aufweisen; **dadurch gekennzeichnet, dass**
- Die zylindrische Kammer mit Flüssiggas gefüllt ist, und außerdem dass
- Die zylindrische Kammer eine Abstützvorrichtung (3) für den Sattel aufweist, welche an die Oberfläche der zylindrischen Kammer geschweißt, eingebaut oder befestigt wird und mit Sattelauflager bei Aluminiumrohren ausgestattet sind.

2. Nach dem Anspruch 1, **dadurch gekennzeichnet, dass** die mit Gas gefüllte, zylindrische Kammer ein wesentlicher Bestandteil des zylindrischen Sattelrohrs ist, wobei die Dicke zum Druckhalten eingerichtet wird, die Unter- und Oberteil geschlossen sind und die Länge zum Erreichen des ausreichenden Volumenzuwachs angemessen ist.

3. Nach dem Anspruch 1, **dadurch gekennzeichnet, dass** die oben genannte mit Neopren (5) isothermisch belegt wird, so dass eventuelle Temperaturschwankungen überprüft werden.

4. Nach dem Anspruch 1, **dadurch gekennzeichnet, dass** die zylindrische Kammer durch die auf das Kammergehäuse eingesetzte Auslass- bzw. Einlassventile gefüllt werden kann, welche für das Gas-Ab- und Auffüllung geeignet sind.

5. Nach dem Anspruch 1 oder 4, **dadurch gekennzeichnet, dass** die Ventile an der Zylinderbasis auf Achse befestigt sind, an der unteren Innenseite (8) des Fahrrad- bzw. Motorradszentralrahmens, an der Gegenseite des Sattelauflagers, an das höhere Ende so geschweißt, dass das Ventil geschützt ist.

6. Nach dem Anspruch 1, **dadurch gekennzeichnet, dass** die Ventile an einer höheren Position befestigt sind, lotrecht zu dem Achse der zylindrischen Kammer, neben dem Sattelauflager, auf jeden Fall in dem Teil, wo sie unabhängig von der Höhe des Sattels immer außer dem Fahrrad- bzw. Motorradszentralrahmen liegen; sie sind deshalb direkt erreichbar, so dass sie durch ein flexibles Rohr (10) direkt benutzt werden, welches an beiden Enden mit einer speziellen Kupplung ausgestattet ist, ohne die Zylinder aus dem Zentralrahmen ausbauen zu müssen.

7. Nach dem Anspruch 1, **dadurch gekennzeichnet, dass**, wenn das Ventil lotrecht zu der zylindrische Kammer ist, ein Loch im Neoprenbelag an der Stelle des Ventils vorgesehen ist, so dass das Ventil vorsteht.

## Revendications

1. Une tige de selle pour bicyclette ou objet similaire, munie d'un dispositif de pompage, comprenant :
- un réservoir cylindrique (1) destiné à contenir le gaz permettant de pomper les pneus de bicyclettes et/ou motocyclettes, le réservoir cylindrique (1) étant équipé de façon à supporter une selle (2), étant réglable en hauteur et fonctionnant comme un dispositif de pompage automatique ;
- Dispositif permettant d'introduire le gaz sous pression contenu dans le réservoir cylindrique (1) dans les pneus comprenant des valves d'entrée/sortie (6,7) placées sur la surface du réservoir cylindrique (1) ; dont les caractéristiques principales sont que
- Le réservoir cylindrique (1) est rempli de gaz liquide sous pression, et que
- Le réservoir cylindrique (1) comprend également un support (3) pour la selle (2) soudée ; intégré ou solidement arrimé à la face supérieure du réservoir cylindrique (1) et équipé d'un support de selle standard (3) pour les tuyaux en aluminium.

2. Tige de selle selon la revendication 1, **caractérisée par le fait que** le réservoir cylindrique (1) contenant le gaz fait partie intégrante du tuyau cylindrique existant soutenant la selle (2), dont l'épaisseur est modifiée pour supporter la pression, dont les extrémités inférieure et supérieure sont fermées, et d'une longueur appropriée permettant un développement suffisant du volume.

3. Tige de selle selon la revendication 1, **caractérisée par le fait que**, afin de contrôler les éventuelles variations de température, ledit réservoir cylindrique (1) est recouvert d'un revêtement en néoprène (5) avec fonction isotherme, sortant du cylindre.

4. Tige de selle selon la revendication 1, **caractérisée par le fait que** le réservoir cylindrique (1) peut être rempli via une valve d'entrée/sortie spécifique (6,7), placée sur la surface du réservoir, modifiée de façon à permettre l'entrée et la sortie du gaz.

5. Tige de selle selon la revendication 1 ou la revendication 4, **caractérisée par le fait que** les valves (6,7) sont placées à la base du cylindre, dans l'axe, dans la partie inférieure interne du cadre central (8) du véhicule, dans la partie opposée au support (3) de la selle (2), à l'extrémité supérieure soudée, de façon à protéger la valve.

6. Tige de selle selon la revendication 1, **caractérisée par le fait que** les valves (6,7) sont placées dans une position supérieure, perpendiculairement à l'axe du réservoir cylindrique (1), près du support (3) de la selle (2), dans tous les cas dans la partie se trouvant, quelque soit la hauteur à laquelle la selle (2) est réglée, hors du cadre central (8) du véhicule, donc directement accessible, de façon à être utilisable immédiatement, au moyen d'un tuyau flexible (10), équipé de poignées rapides aux extrémités, sans devoir retirer le cylindre du cadre principal (8).

7. Tige de selle selon la revendication 1, **caractérisée par le fait que**, lorsque la valve (6,7) est perpendiculaire au réservoir cylindrique (1), le revêtement en néoprène (5) présente un trou dans la direction de la même valve, ce qui lui permet de se projeter naturellement.
